# EUROPEAN PATENT SPECIFICATION

(11) **EP 1 381 649 B1**
(45) Date of publication and mention of the grant of the patent: **21.06.2006**
(21) Application number: 02726761.6
(22) Date of filing: 19.04.2002
(51) Int. Cl.: C08L 67/06, C08K 5/14, C08K 5/3435, C08K 5/08

(54) **COLORED PEROXIDE AND POLYESTER FORMULATIONS**
FARBIGE PEROXYD- UND POLYESTER-FORMULIERUNGEN
FORMULES DE PEROXYDE ET DE POLYESTER COLOREES

(30) Priority: 26.04.2001 US 843600
(43) Date of publication of application: 21.01.2004
(73) Proprietor: Chemtura Corporation, Middlebury, CT 06749 (US)
(72) Inventor: NWOKO, Delphine, Longview, TX 75605 (US); FRENKEL, Peter, Longview, Tx 75605 (US)
(74) Representative: Spott, Gottfried
(86) International application number: PCT/US2002/012093
(87) International publication number: WO 2002/088249

(56) References cited:
- EP-A- 0 563 894
- FR-A- 1 442 893
- US-A- 4 187 208
- US-A- 4 522 963
- DATABASE CA [Online] CHEMICAL ABSTRACTS SERVICE, COLUMBUS, OHIO, US; NAKAMURA, HISAOMI ET AL: "Putty compositions" retrieved from STN Database accession no. 108:23504 XP002207737 & JP 62 091572 A (NIPPON PAINT CO., LTD., JAPAN) 27 April 1987 (1987-04-27)
- DATABASE CA [Online] CHEMICAL ABSTRACTS SERVICE, COLUMBUS, OHIO, US; SEMBAI, E. I. ET AL: "Curing of unsaturated polyester resins in the presence of methacryloylanthraquinone dyes" retrieved from STN Database accession no. 104:89684 XP002207738 & PLAST. MASSY (1985), (10), 62-3,
- DATABASE CA [Online] CHEMICAL ABSTRACTS SERVICE, COLUMBUS, OHIO, US; GROBBAUER, PETER: "Detecting curing agents in unsaturated polyesters" retrieved from STN Database accession no. 102:150462 XP002207739 & AT 8 301 387 A (VIANOVA KUNSTHARZ A.-G., AUSTRIA) 15 July 1984 (1984-07-15)
- MEDENOUVO F ET AL: "OBTENTION DE COMPOSITES FIBRES DE VERRE-POLYESTERS PAR VOIE PHOTOCHIMIQUE PHOTOCHEMICAL MANUFACTURE OF GLASS-POLYESTER COMPOSITE FIBERS" ANGEWANDTE MAKROMOLEKULARE CHEMIE, HUTHIG UND WEPF VERLAG, BASEL, CH, no. 229, 1995, pages 29-62, XP001095542 ISSN: 0003-3146

## Description

### 1. Field of the Invention

The present invention relates to the hardening of unsaturated polyester resins using organic peroxide initiators in the presence of dyes.

### 2. Description of Related Art

Pigments based on metal oxides are known coloring agents for peroxides; however, they are predominantly used with solid peroxides (such as benzoyl peroxide, lauroyl peroxide, etc.) Their liquid organic peroxide formulations have a very limited shelf-life. In addition, a wide variety of phenylenediamine dyes were disclosed in the patent literature as effective coloring agents for solid peroxides (benzoyl peroxide, cyclohexanone peroxide, decanoyl peroxide). Their limited applications for liquid organic peroxide products could be explained by their mutual incompatibility, which results in active oxygen content losses and degradation of the peroxides. Most of the commercially available dyes for both liquid and solid organic peroxides are red. There are also examples of yellow dyes suitable for organic peroxides; however, very often yellow-colored peroxides are not distinctively different from the undyed material.

The following advantages are realized when colored formulations are used:
1. Organic peroxides used in external mixing resin/peroxide spray guns are often dyed as a visual aid to help the operator confirm an adequate flow out of the peroxide nozzle.
2. The presence of a peroxide and uniformity of mixing the resin with the peroxide is indicated by observing the color distribution therein.
3. The coloration in most instances causes the polymerization product to become slightly pigmented with a pre-selected color.
4. Having pigmented peroxides of several colors permits different colors to be offered for different products (or their grades), thereby helping to prevent their inadvertent misuse.

U.S. Patent No. 3,181,991 discloses organic peroxides such as benzoyl peroxide to which a coloration has been imparted by means of incorporating a relatively small proportion of a pigment with the peroxide. The pigmentation material is an organic or inorganic compound having a distinct color and is inert with respect to organic peroxides.

U.S. Patent No. 3,182,026 discloses the combination of pigmented peroxide compositions with certain substances in order to make the total composition substantially permanently homogeneous and prevent them from physically separating into their component parts during storage or use. Preferably, the compositions comprise an intermixture of an organic peroxide, a compatible pigment therefor, and an activated gel in an amount sufficient to cause the composition to be permanently homogeneous.

U.S. Patent No. 3,382,296 discloses a peroxide-sensitive mixture of an unsaturated polyester and a secondarily substituted aliphatic N,N'-diphenyl-*p*-phenylenediamine.

U.S. Patent No. 3,390,121 discloses achieving uniform blending of a curing catalyst in the curing of polyester resins by including a color indicating compound in the polyester esing curing composition. The compositions include as the indicator a diphenylamine compound having at least one additional resonating group, i.e. a bivalent sulfur, a bivalent amino or a monovalent amino group, which in the presence of a peroxide curing catalyst gives a fugitive color which disappears during the curing.

U.S. Patent No. 4,164,492 discloses a method for determining the degree of cure of polyester and epoxy resins which includes the steps of adding a catalyst, containing a pigment, to the resin; mixing the two components to provide a visually uniform distribution of the catalyst and pigment throughout the resin; and, depositing the mixture in a desired position for curing. The pigment can also be added directly to the resin rather than the catalyst. Additionally, in either alternative, at the completion of the curing the color imparted by the pigment has substantially disappeared from the cured product as though no pigment had been employed. Also disclosed is a benzoyl peroxide paste composition, for curing polyester resins, having a pigment the color of which substantially disappears from the cured product.

U.S. Patent No. 4,232,136 discloses a process for the controlled hardening of unsaturated polyester resins at temperatures of -5°C to +150 °C using an organic peroxide initiator. According to the process of the invention an organic dyestuff of a specific given formula is admixed with the polyester resin and/or the organic peroxide in an amount of 0.001 to 0.05% by weight, calculated for the weight of the polyester resin. It is said that the composition and homogeneity of the polyester resin/additive mixtures can be observed easily and the progress of cross-linking can be monitored visually through characteristic colors and color changes, respectively.

U.S. Patent Nos. 4,370,428 and 4,460,719 disclose polyester and hardener compositions that have incorporated therein pigments of Toluidine Red Y and Parachlor R to enable the user to determine when mixing is uniform and when the cure has been completed.

U.S. Patent No. 4,522,963 discloses a process for monitored cross-linking of unsaturated polyester resins in the presence of a metal-ion-containing accelerator and an organic peroxide initiator, complemented by promotor in some cases. The cross-linking is carried out in the presence of one of the compounds from the group consisting of alizarin, sodium alizarinesulfonate, 3-nitroalizarin, chinizarine, or purpurin, where the substituents are H atoms or OH, NO₂, SO₃H, or SO₃Na groups with the restriction that at least one of them should be other than H, which is present in a ratio of from 0.005 to 0.5, preferably 0.01 to 0.1 percent (mass/mass), compared to the mass of the polyester resin, and cross-linking is trailed by the color change in the system. It is said that all of the chemical-technological processes involved in the processing of unsaturated polyester resins can thus be monitored visually.

Notwithstanding the foregoing, a need still remains for new multicolor dyes compatible with organic peroxides used for curing unsaturated polyester resins, especially liquid peroxides, such as ketone peroxides, hydroperoxides, peroxyketals, peroxydicarbonates, and peroxyesters.

### SUMMARY OF THE INVENTION

The present invention is directed to the curing of unsaturated polyester resins in the presence of an organic peroxide and a dye compatible with the organic peroxide, wherein the dye is selected from a group of anthraquinone derivatives; optically a pyrazolone derivative may be used in addition and thus also mixtures thereof may be used as dyes.

More specifically, the present invention is directed to a composition comprising:
A) at least one dye; and
B) at least one additional component selected from the group consisting of:
   1) unsaturated polyester resins; and
   2) organic peroxide initiators;
wherein the dye is compatible with any organic peroxide present and is selected from the group of anthraquinone derivatives as defined in claim 1. In a further embodiment a further pyrazalone derivative selected from as defined in claim 2 may be used. Thus the present invention is directed to a composition comprising:
A) at least one dye; and
B) at least one additional component selected from the group consisting of:
   1) unsaturated polyester resins; and
   2) organic peroxide initiators;
wherein the dye is compatible with any organic peroxide present and is selected from the group consisting of:
anthraquinone derivatives of the structure: 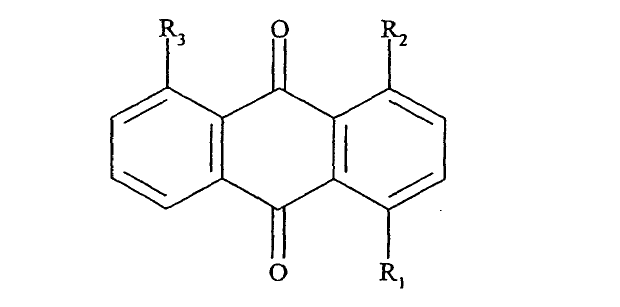 wherein R₁, R₂, and R₃ are independently selected from the group consisting of hydrogen, 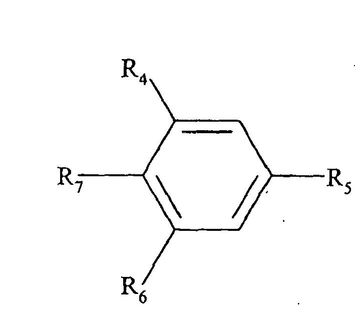 alkyl, and wherein R₇ is -NH, -NH-R₈, or -S, R₈ is alkylene, and R₄, R₅, and R₆ are independently selected from the group consisting of hydrogen, alkyl, and halogen, provided that at least one of R₁, R₂, and R₃ is

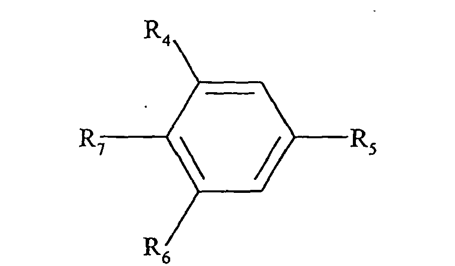

Further, the composition of the present invention can comprise a further dye selected from
pyrazolone derivatives of the structure: 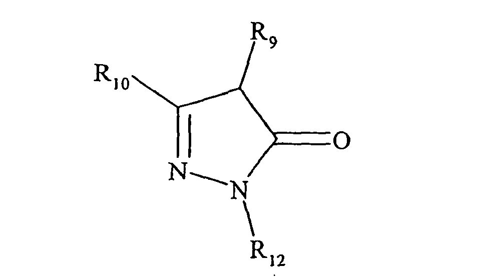 wherein
R₉ is hydrogen or -NH-R₁₁,
R₁₀ and R₁₁ are independently selected from the group consisting of alkyl, aryl, and aralkyl, and
R₁₂ is an aryl group; and 1-phenyl-3-methyl-4-(alkylphenylazo)-5-pyrazolone.

Thus, according to the invention also a mixture or mixtures of the above mentioned another quinone derivative(s) and the above mentioned pyrazolone derivative(s) may be employed as dye.

In another aspect, the present invention is directed to a process for curing unsaturated polyester resins with organic peroxide initiators, which process comprises combining an unsaturated polyester resin, an organic peroxide initiator, and a dye that is compatible with the organic peroxide and is selected from the group consisting of anthraquinone derivatives as defined in claims 1 and 8, optionally together with pyrazalone derivatives as defined in claims 2 and 9, and mixtures thereof.

Thus, the present invention is directed to an improvement in a process for curing unsaturated polyester resins with organic peroxide initiators, wherein the improvement comprises combining an unsaturated polyester resin, an organic peroxide initiator, and a dye that is compatible with the organic peroxide and is selected from the group consisting of:
anthraquinone derivatives of the structure: 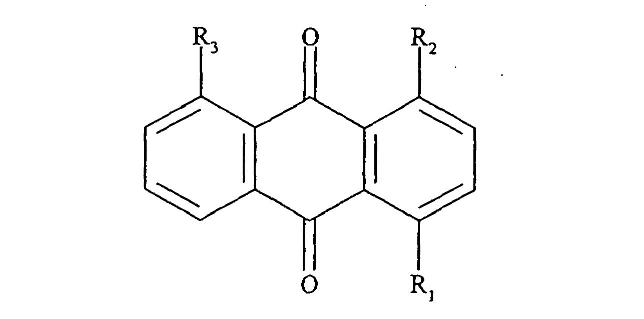
wherein R₁, R₂, and R₃ are independently selected from the group consisting of hydrogen, alkyl, and 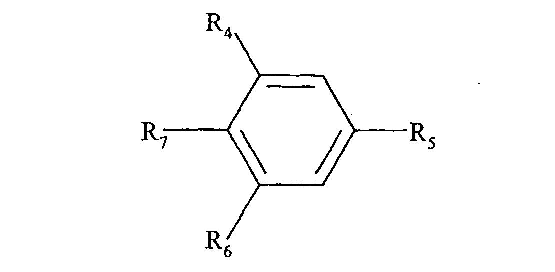 wherein R₇ is -NH, -NH-R₈, or -S, R₈ is alkylene, and R₄, R₅, and R₆ are independently selected from the group consisting of hydrogen, alkyl, and halogen, provided that at least one of R₁, R₂, and R₃ is

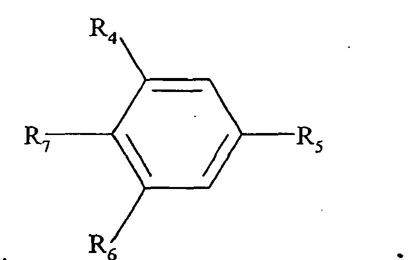

In a further embodiment, the above process comprises the addition of a further dye selected from
pyrazolone derivatives of the structure: 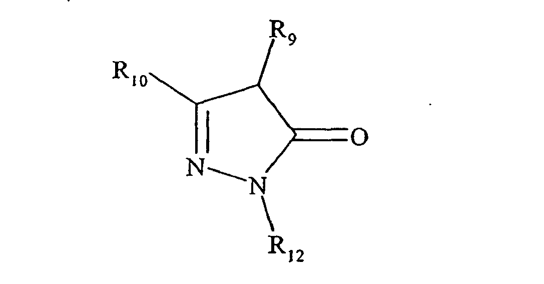 wherein
R₉ is hydrogen or -NH-R₁₁,
R₁₀ and R₁₁ are independently selected from the group consisting of alkyl, aryl, and aralkyl, and
R₁₂ is an aryl group; and 1-phenyl-3-methyl-4-(alkylphenylazo)-5-pyrazalone.

Thus, according to the present invention also a mixture or mixtures of the above mentioned anthraquinone(s) and pyrazolone(s) may be employed.

### DESCRIPTION OF THE PREFERRED EMBODIMENTS

The compositions of the present invention comprise:
A) at least one dye; and
B) at least one additional component selected from the group consisting of:
   1) unsaturated polyester resins; and
   2) organic peroxide initiators;
wherein the dye is compatible with any organic peroxide present and is selected from the group consisting of:
anthraquinone derivatives of the structure: 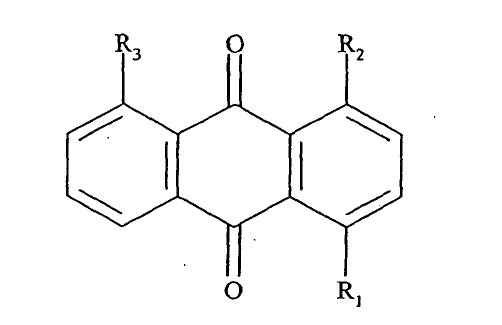
wherein R₁, R₂, and R₃ are independently selected from the group consisting of hydrogen, alkyl, and 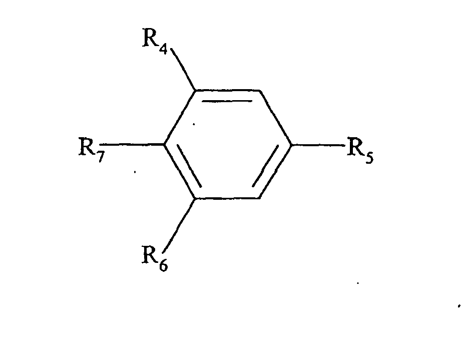 wherein R₇ is -NH, -NH-R₈, or -S, R₈ is alkylene, and R₄, R₅, and R₆ are independently selected from the group consisting of hydrogen, alkyl, and halogen, provided that at least one of R₁, R₂, and R₃ is 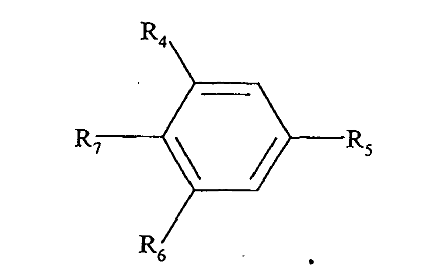 In a further embodiment, the composition comprises a further dye selected from
pyrazolone derivatives of the structure: 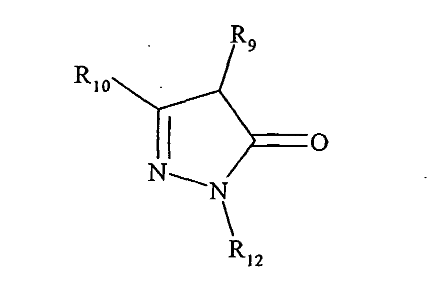 wherein
R₉ is hydrogen or -NH-R₁₁,
R₁₀ and R₁₁ are independently selected from the group consisting of alkyl, aryl, and aralkyl, and
R₁₂ is an aryl group; and 1-phenyl-3-methyl-4-(alkylphenylazo)-5-pyrazolone.

Where any of R₁, R₂, or R₃ in the above formulae are alkyl, they are preferably lower alkyl, more preferably lower alkyl of from 1 to 5 carbon atoms, i.e., methyl, ethyl, propyl, butyl, pentyl, and isomers thereof, e.g., isopropyl, tert-butyl, neopentyl, and the like. Where two of R₁, R₂, and R₃ are alkyl, they may be the same or different.

Similarly, where R₄, R₅, and/or R₆ are alkyl, they are preferably lower alkyl, more preferably lower alkyl of from 1 to 5 carbon atoms, as described above. Again, where two or more of R₄, R₅, and R₆ are alkyl, they may be the same or different.

Where R₄, R₅, and/or R₆ are halogen, they are preferably chloro, bromo, or iodo, more preferably bromo. Where two or more of R₄, R₅, and R₆ are halogen, they may be the same or different; preferably, they will be the same.

When present in the above formulae, R₈ is alkylene, preferably lower alkylene, more preferably lower alkylene of from 1 to 5 carbon atoms, i.e., methylene, ethylene, propylene, butylene, pentylene, and isomers thereof, e.g., isopropylene, tert-butylene, neopentylene, and the like. As employed herein, the term "alkylene" is intended to mean an alkyl group having an additional hydrogen removed to provide two bonding sites on the moiety, e.g., -CH₂-, -CH₂CH₂-, and so on.

Where R₁₀ and/or R₁₁ are alkyl, they are preferably lower alkyl, more preferably lower alkyl of from 1 to 5 carbon atoms, as described above. Again, where both R₁₀ and R₁₁ are alkyl, they may be the same or different.

Where R₁₀ and/or R₁₁ are aryl, it is preferred that they, as well as R₁₂, which is always aryl, be aromatic groups having from 6 to 10 ring carbon atoms, such as, phenyl or naphthyl. Phenyl groups are preferred. These aryl groups can, if desired, have substituents attached thereto. Naturally, such substituents will normally be chosen from those that impart no substantial detriment to the dyeing properties of the pyrazolone, for example, alkyl groups. Where two or more of R₁₀, R₁₁, and R₁₂ are aryl, they may be the same or different.

R₁₀ and/or R₁₁ can also be aralkyl, i.e., an aryl-substituted alkyl, such as, for example, benzyl, where, again, the phenyl ring may, if desired, be substituted with innocuous moieties.

Examples of the most suitable dyes for pigmenting organic peroxides used for curing unsaturated polyester resins in accordance with the present invention are listed below in Table 1.

| Table 1 | |
|---|---|
| Anthraquinone Derivatives | |
| Trade Designation | Chemical Name |
| Morplas Blue 2R (solvent Blue 128) | 9,10-anthracenedione-1,4-bis (2-bromo-4,6-dimethylphenyl) amino |
| Morplas Violet 3B (solvent Violet 38) | 9,10-anthracenedione-1,4{(2,6-dibromo-4-methyl phenyl) amino} |
| Morplas Yellow GS (solvent Yellow 163) | 9,10-anthracenedione-1,4-bis (phenylthio) |
| Morplas Violet 14 (solvent Violet 14) | 9,10-anthracenedione-1,8-bis(methylphenyl ) amino |
| Morplas Blue E (solvent Blue 101) | 9,10-anthracenedione-1,4-bis(alkylphenyl) amino |
| Pylakrome Blue LX-9704 (solvent Blue 58) | Undisclosed by manufacturer |

| Pyrazolone Derivatives | |
|---|---|
| Pylakrome Yellow LX - 10124* | Undisclosed by manufacturer |
| Pylam Liquid Oil Yellow LO - 2112* (solvent Yellow) | 1 -phenyl-3-methyl-4-(alkylphenylazo)-5-pyrazalone |

| Mixtures | |
|---|---|
| Pylakrome Green LX - 10908* | Undisclosed by manufacturer |

| | |
|---|---|
| * Reference Examples | |

These dyes can be successfully used for coloring any peroxide catalyst that can be used for the polymerization of an unsaturated polyester resin. These catalysts are organic peroxides that are generally used industrially and include ketone peroxides, such as, methyl ethyl ketone peroxide, methyl isobutyl ketone peroxide, cyclohexanone peroxide, and the like; hydroperoxides, such as, cumene hydroperoxide, t-butyl hydroperoxide, and the like; diacyl peroxides, such as, benzoyl peroxide, lauroyl peroxide, and the like; peroxyketals, such as, 1,1-di(t-butyl peroxy)cyclohexane, 1,1-di(t-butyl peroxy)3,3,5-trimethylcyclohexane, and the like; peroxyesters, such as, t-butyl peroxybenzoate, t-butyl peroxy 2-ethyl hexanoate, and the like; peroxydicarbonates, such as, bis(4-t-butyl cyclohexyl) peroxydicarbonate) and the like; and mixtures of the foregoing used for curing unsaturated polyester resins.

It should be understood that, in accordance with the present invention, the order of addition is not critical, for example,
1. the dye can be combined with the organic peroxide and then this combination can be combined with the polyester, or
2. the dye can be combined with the polyester and then this combination can be combined with the organic peroxide.

Colored formulations can, for example, be made by dissolving solid dyes in liquid organic peroxides or by adding solutions of the dyes (solid or liquid) to the organic peroxides.

The dyes are added at levels ranging from 0.001 to 10 wt.% based on the weight of the peroxide to be employed, preferably 0.01 to 2 wt.%, and, more preferably, from 0.1 to 0.5 wt.%.

The term "polyester resin" as used herein refers to the product of a mixture of one or more unsaturated polyesters with one or more unsaturated compounds that can be crosslinked. Unsaturated polyesters are produced by esterifying a saturated or unsaturated dicarboxylic acids or the corresponding anhydrides with saturated or unsaturated polyfunctional alcohols. Examples of these acids are maleic, fumaric, phthalic, itaconic acid and the like. These acids can be partially replaced by one or more saturated dicarboxylic acids. Examples of these are adipic, sebacic, or succinic acid, and the like. Examples of the polyfunctional alcohols that may be used individually or in blends of two or more are ethylene glycol, diethylene glycol, propylene glycol, triethylene glycol and the like. The unsaturated polyester obtained by reacting the above is then dissolved in a reactive monomer, such as, styrene, acrylic compounds, divinyl benzene, or diallylphthalate.

The advantages and the important features of the present invention will be more apparent from the following examples.

### EXAMPLES

The stability of the colored organic peroxide formulations was tested with the Displacement Test, Active Oxygen, and Color Absorbency analytical methods. Methyl ethyl ketone peroxide (MEKP) product (Hi Point 90, supplied by Crompton Corporation) was used for testing as representing one of the most reactive organic peroxides. Also, colored formulations of t-butyl peroxybenzoate (Esperox 10), 80% solution of 1,1-di(t-butyl peroxy) cyclohexane in butyl benzyl phthalate (USP 400P) and cumene hydroperoxide (CHP 158) supplied by Crompton Corporation were tested representing peroxyesters, peroxyketals, and hydroperoxides, respectively.

### Displacement Test

The Displacement Test is an accelerated aging test to determine if a product will develop gas pressure in the commercial package as it ages. A 10 ml sample is sealed in a 14 ml vial that is fitted with a dip tube that leads from the vial to a 12 ml graduated tube. The vial with the sample is placed in a 55° C dry bath and the amount of liquid displaced by the gas pressure developed in the vial is recorded over an eight hour period. The testing time was extended to a forty-eight hour period in order to ensure a longer term stability of the compositions. The results are shown in Table 2.

### Active Oxygen Method

The Active Oxygen Method determines the relative concentration of peroxy groups in formulations. Each peroxy group is considered to contain one active oxygen atom. A 0.3 g sample of the ketone peroxide is dissolved in a solution of glacial acetic acid, water, and excess potassium iodide to produce a very dark reddish-brown iodine color. The iodine produced is determined by reducing it back to colorless iodine with a standardized 0.1 N sodium thiosulfate solution. The analysis was conducted right after the colored compositions were prepared and three months later to ensure peroxide stability within this period. The results are shown in Table 3.

### Color Absorbency

The Color Absorbency was measured to ensure dye stability in peroxide. A Hach DR2000 spectrophotometer was used for the color analysis. The samples to be analyzed were diluted 1:50 by volume with the colorless product and analyzed at various wavelengths for absorbency. The optimum wavelength for the absorbency measurements was achieved by scanning the wavelength spectra and plotting absorbency vs. wavelength. Yellow and green samples were measured at 395 nm; blue and violet samples were measured at 625 and 560 nm, respectively. The analysis was conducted right after the formulations were prepared and three months later. The results are shown in Table 4.

The performance of the colored organic peroxide compositions in curing unsaturated polyester resins was analyzed in the Gel Test Method.

### Gel Time Test

A Randolph Gel Time Tester, Model 100, was used to determine the gel time for a peroxide in a standard polyester resin. A 2.0 g sample of peroxide was added to 130 g of resin to gel the resin within 25-30 minutes at 25 °C. The results are shown in Table 5.

### Example 1

### Coloring Organic Peroxides

A quantity of 0.3 g of Morplast Blue 2R was dissolved in 100 g of Hi Point 90. The sample exhibited a blue color of 0.779 color absorbency that did not change substantially over a period of three months. (0.760, 2.4% change). The dye did not affect the stability of the peroxide. The change in the Active Oxygen content was as little as 0.8% over a period of three months. A quantity of 1.5 ml was displaced over eight hours at 55 °C when the sample was analyzed by the Displacement Test. The dye did not substantially affect the curing characteristics of the peroxide. After being stored for three months, the colored organic peroxide composition gelled the standard unsaturated polyester resin within 25.96 minutes, which is within the expected variation for the non-colored peroxide.

Other examples related to Hi Point 90 (ketone peroxide) are included in Tables 3, 4, and 5. Examples related to other classes of organic peroxide (Displacement Test data) such as peroxyketal, peroxyester, and hydroperoxide are included in Table 6.

### Example 2

### Coloring Unsaturated Polyester Resins

A general-purpose cobalt promoted unsaturated polyester resin, made up of 90% di-cyclopentadiene (DCPD) resin and 10% orthophthalic resin was used for testing. A dye (either Pylakrome Blue or Pylakrome Green) was added at 0.05-0.1 wt.% and mixed with the resin, and a colored resin composition was obtained. Based on visual observations, the color did not fade within seven days of the test at ambient temperature.

| Table 2 | | | | | |
|---|---|---|---|---|---|
| Displacement Test Data* on Colored MEKP Formulations | | | | | |
| Dye | Displacement, ml /(time, hours) | | | | |
| | 0.25 | 4 | 8 | 24 | 48 |
| Red (Control) | 1.0 | 1.5 | 1.5 | 1.8 | 1.8 |
| Pylakrome Blue | 1.2 | 1.8 | 1.8 | 2.0 | 2.0 |
| Pylakrome Liquid Oil Yellow⁺ | 1.0 | 1.1 | 1.4 | 2.0 | -- |
| Pylakrome Green⁺ | 1.0 | 1.5 | 1.5 | 1.8 | 1.8 |
| Pylakrome Yellow⁺ | 1.0 | 1.5 | 1.5 | 1.9 | 1.9 |
| Morplast Blue 2R | 1.0 | 1.5 | 1.5 | 1.8 | 1.8 |
| Morplast Yellow GS | 0.9 | 1.4 | 1.4 | 1.4 | 1.4 |
| Morplast Violet 3B | 1.0 | 1.5 | 1.5 | 1.9 | 1.9 |
| Morplast Violet 14 | 1.0 | 1.5 | 1.5 | 1.9 | 1.9 |

| | | | | | |
|---|---|---|---|---|---|
| *Typical displacement for the non-colored MEKP is within 2.0 ml over a period of eight hours. | | | | | |
| ⁺Reference Example | | | | | |

| Table 3 | | |
|---|---|---|
| Active Oxygen of Colored MEKP Compositions | | |
| Dye | Active Oxygen* Content, % | |
| | After Three Months | % Change |
| Pylakrome Blue | 8.84 | 1.2 |
| Pylakrome Liquid Oil Yellow⁺ | 8.82 | 1.5 |
| Pylakrome Green ⁺ | 8.82 | 1.5 |
| Pylakrome Yellow⁺ | 8.79 | 1.8 |
| Morplast Blue 2R | 8.88 | 0.8 |
| Morplast Yellow GS | 8.81 | 1.6 |
| Morplast Violet 3B | 8.79 | 1.8 |
| Morplast Violet 14 | 8.86 | 1.0 |

| | | |
|---|---|---|
| *Standard variation for A.O. is 8.8 - 9.0 %. | | |
| +Reference Example | | |

| Table 4 | | | |
|---|---|---|---|
| Color Absorbency of Colored MEKP Compositions | | | |
| Dye | Color Absorbency | | |
| | Original | After 3 Mos. | % Change |
| Pylakrome Blue | 0.869 | 0.895 | -3.0 |
| Pylakrome Liquid Oil Yellow⁺ | 1.832 | 1.479 | 19.3 |
| Pylakrome Greer⁺ | 2.416 | 2.386 | 1.2 |
| Pylakrome Yellow⁺ | 2.716 | 2.671 | 1.7 |
| Morplast Blue 2R | 0.779 | 0.760 | 2.4 |
| Morplast Yellow GS | 2.862 | 2.361 | 17.5 |
| Morplast Violet 3B | 0.335 | 0.301 | 10.1 |
| Morplast Violet 14 | 1.665 | 1.775 | -6.6 |

| | | | |
|---|---|---|---|
| + Reference example | | | |

| Table 5 | |
|---|---|
| Gel Time of Colored MEKP Compositions | |
| Dye | Gel Time* |
| | After Three Months |
| Pylakrome Blue | 25.70 |
| Pylakrome Liquid Oil Yellow | 26.67 |
| Pylakrome Green ⁺ | 26.27 |
| Pylakrome Yellow ⁺ | 27.69 |
| Morplast Blue 2R | 25.96 |
| Morplast Yellow GS | 27.69 |
| Morplast Violet 3B | 26.47 |
| Morplast Violet 14 | 28.40 |

| | |
|---|---|
| *Standard Variation for the Gel Time is 24 - 30 minutes. | |
| ⁺ Reference Example | |

| Table 6 | | | | | |
|---|---|---|---|---|---|
| Displacement Test Data for Colored Organic Peroxide Formulations | | | | | |
| Organic Peroxide | Dye | Displacement, ml /(time, hours) | | | |
| | | 0.25 | 4 | 24 | 48 |
| Esperox 10 | None | 0.8 | 1.0 | 1.0 | 1.0 |
| USP 400P | None | 0.7 | 0.9 | 0.9 | 1.5 |
| CHP 158 | None | 0.0 | 0.0 | 0.0 | 0.0 |
| Esperox 10 | Pylakrome Green⁺ | 0.8 | 1.0 | 1.0 | 1.5 |
| USP 400P | Pylakrome Green⁺ | 0.3 | 0.5 | 0.7 | 1.4 |
| CHP 158 | Pylakrome Green⁺ | 0.7 | 0.9 | 0.9 | 0.9 |
| Esperox 10 | Pylakrome Blue | 0.6 | 0.8 | 0.8 | 0.8 |
| USP 400P | Pylakrome Blue | 0.0 | 0.0 | 0.0 | 0.1 |
| CHP 158 | Pylakrome Blue | 0.4 | 0.5 | 0.5 | 0.5 |
| Esperox 10 | Morplas Violet 3B | 0.8 | 1.0 | 1.0 | 1.0 |
| USP 400P | Morplas Violet 3B | 0.8 | 1.0 | 1.1 | 1.5 |
| CHP 158 | Morplas Violet 3B | 0.4 | 0.5 | 0.5 | 0.5 |

| | | | | | |
|---|---|---|---|---|---|
| + Reference Example | | | | | |

In view of the many changes and modifications that can be made without departing from principles underlying the invention, reference should be made to the appended claims for an understanding of the scope of the protection to be afforded the invention.

## Claims

1. A composition comprising:
A) at least one dye; and
B) at least one additional component selected from the group consisting of:
1) unsaturated polyester resins; and
2) organic peroxide initiators;
wherein the dye is compatible with any organic peroxide present and is selected from the group consisting of: anthraquinone derivatives of the structure: 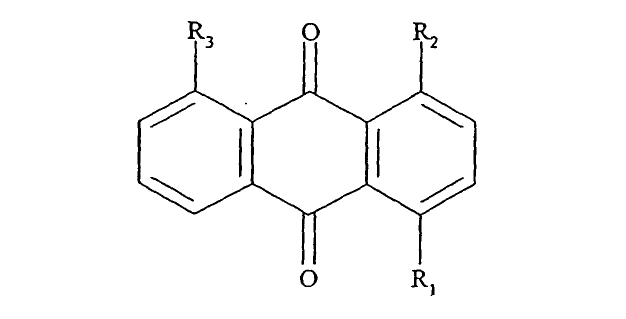 wherein R₁, R₂, and R₃ are independently selected from the group consisting of hydrogen, alkyl, and 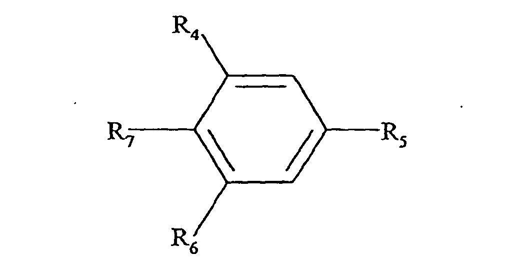 wherein R₇ is -NH, -NH-R₈, or -S, Rg is alkylene, and R₄, R₅, and R₆ are independently selected from the group consisting of hydrogen, alkyl, and halogen,
provided that at least one of R₁, R₂, and R₃ is

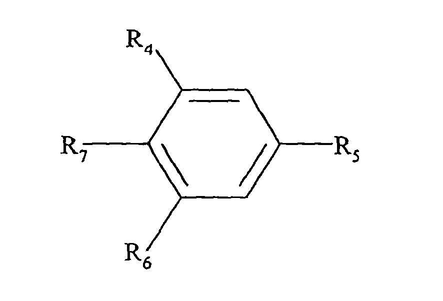

2. The composition of claim 1, which comprises a further dye selected from pyrazolone derivatives of the structure: 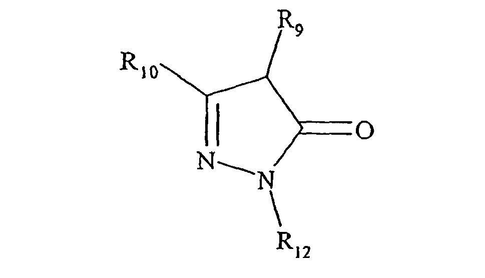 wherein
R₉ is hydrogen or -NH-R₁₁,
R₁₀ and R₁₁ are independently selected from the group consisting of alkyl, aryl, and aralkyl, and
R₁₂ is an aryl group; and 1-phenyl-3-methyl-4-(alkylphenylazo)-5-pyrazalone.

3. The composition of claim 1 or 2 wherein the peroxide is selected from the group consisting of ketone peroxides, hydroperoxides, diacyl peroxides, peroxyketals, peroxyesters, peroxydicarbonates, and mixtures of the foregoing.

4. The composition of claim 3, wherein the peroxide is selected from the group consisting of methyl ethyl ketone peroxide, methyl isobutyl ketone peroxide, cyclohexanone peroxide, cumene hydroperoxide, t-butyl hydroperoxide, benzoyl peroxide, lauroyl peroxide, 1,1-di(t-butyl peroxy)cyclohexane, 1,1-di(t-butyl peroxy)3,3,5-trimethylcyclohexane, t-butyl peroxybenzoate, t-butyl peroxy 2-ethyl hexanoate, bis(4-t-butyl cyclohexyl) peroxydicarbonate) and mixtures of the foregoing.

5. The composition of any one of claims 1 to 4 wherein the dye is selected from the group consisting of 9,10-anthracenedione-1,4-bis (2-bromo-4,6-dimethylphenyl) amino; 9,10-anthracenedione-1,4 {(2,6-dibromo-4- methyl phenyl) amino}; 9,10-anthracenedione-1,4-bis (phenylthio); 9,10-anthracenedione-1,8-bis(methylphenyl) amino, and 9,10-anthracenedione-1,4-bis(alkylphenyl) amino.

6. The composition according to one of claims 1 to 5, comprising the organic peroxide, the polyester resin, and the dye.

7. The composition of Claim 6 wherein the dye is present at a level ranging from 0.001 to 10 wt.% based on the weight of the peroxide.

8. A process for curing unsaturated polyester resins with organic peroxide initiators, which comprises combining an unsaturated polyester resin, an organic peroxide initiator, and a dye that is compatible with the organic peroxide and is selected from the group consisting of : anthraquinone derivatives of the structure: 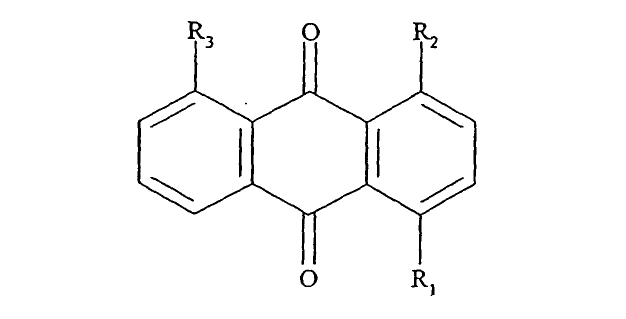 wherein R₁, R₂, and R₃ are independently selected from the group consisting of hydrogen, alkyl, and 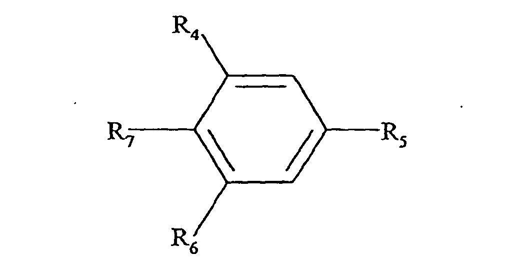 wherein R₇ is -NH, -NH-R₈, or -S, Rg is alkylene, and R₄, R₅, and R₆ are independently selected from the group consisting of hydrogen, alkyl, and halogen,
provided that at least one of R₁, R₂, and R₃ is

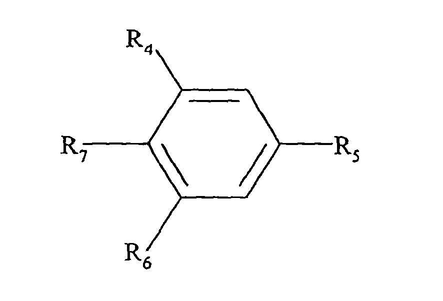

9. The process of claim 8, wich comprises the addition of a further dye selected from pyrazolone derivatives of the structure: 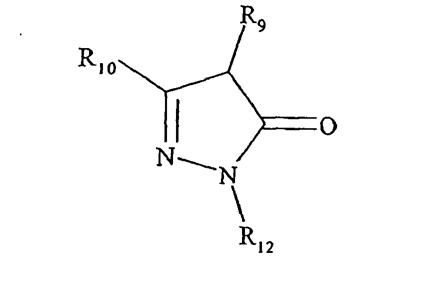 wherein
R₉ is hydrogen or -NH-R₁₁,
R₁₀ and R₁₁ are independently selected from the group consisting of alkyl, aryl, and aralkyl, and
R₁₂ is an aryl group; and 1-phenyl-3-methyl-4-(alkylphenylazo)-5-pyrazalone.

10. The process of Claim 8 or 9 wherein the dye is added at a level ranging from about 0.001 to about 10 wt.% based on the weight of the peroxide.

11. The process of any one of claims 8 to 10 wherein the peroxide is selected from the group consisting of ketone peroxides, hydroperoxides, diacyl peroxides, peroxyketals, peroxyesters, peroxydicarbonates, and mixtures of the foregoing.

12. The process of claim 11 wherein the peroxide is selected from the group consisting of methyl ethyl ketone peroxide, methyl isobutyl ketone peroxide, cyclohexanone peroxide, cumene hydroperoxide, t-butyl hydroperoxide, benzoyl peroxide, lauroyl peroxide, 1,1-di(t-butyl peroxy)cyclohexane, 1,1-di(t-butyl peroxy)3,3,5-trimethylcyclohexane, t-butyl peroxybenzoate, t-butyl peroxy 2-ethyl hexanoate, bis(4-t-butyl cyclohexyl) peroxydicarbonate) and mixtures of the foregoing.

13. The process of any one of claims 8 to 12 wherein the dye is selected from the group consisting of 9,10-anthracenedione-1,4-bis (2-bromo-4,6-dimethylphenyl) amino; 9.10-anthracenedione-1,4{(2,6-dibromo-4- methyl phenyl) amino}; 9,10-anthracenedione-1,4-bis (phenylthio); 9,10-anthracenedione-1,8-bis(methylphenyl) amino; and 9,10-anthracenedione-1,4-bis(alkylphenyl) amino.

## Patentansprüche

1. Zusammensetzung, umfassend:
A) mindestens einen Farbstoff und
B) mindestens eine zusätzliche Komponente, ausgewählt aus der Gruppe, bestehend aus:
1) ungesättigten Polyesterkunststoffen und
2) organischen Peroxidinitiatoren,
wobei der Farbstoff mit einem beliebigen vorliegenden organischen Peroxid kompatibel ist und ausgewählt ist aus der Gruppe, bestehend aus:
Anthrachinonderivaten der folgenden Struktur: 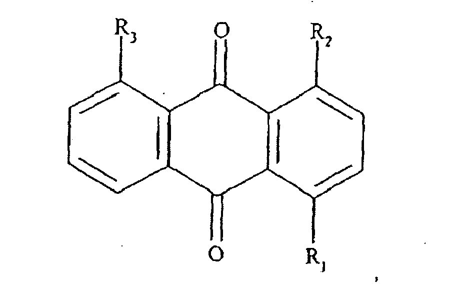
wobei R₁, R₂ und R₃ unabhängig ausgewählt sind aus der Gruppe, bestehend aus Wasserstoff, Alkyl und 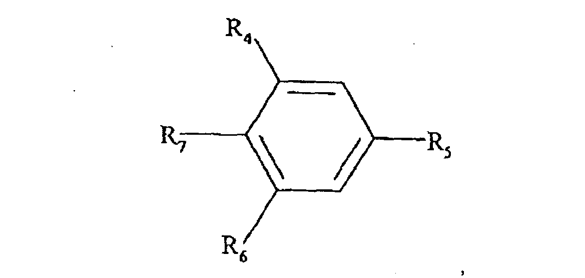 wobei R₇ für-NH, -NH-R₈ oder-S steht, R₈ für Alkylen steht, und R₄, R₅ und R₆ unabhängig ausgewählt sind aus der Gruppe, bestehend aus Wasserstoff, Alkyl und Halogen,
mit der Maßgabe, dass mindestens eines von R₁, R₂ und R₃ für 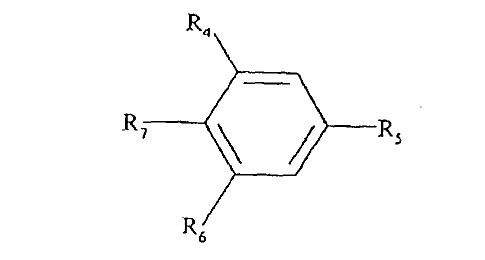 steht.

2. Zusammensetzung nach Anspruch 1, die einen weiteren Farbstoff umfasst, der ausgewählt ist aus Pyrazolonderivaten der folgenden Struktur: 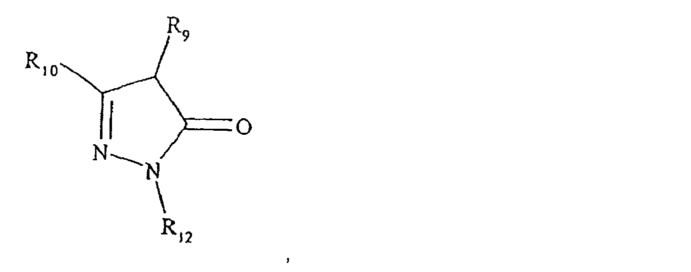 wobei
R₉ für Wasserstoff oder -NH-R₁₁ steht,
R₁₀ und R₁₁ unabhängig ausgewählt sind aus der Gruppe, bestehend aus Alkyl, Aryl und Aralkyl, und
R₁₂ für eine Arylgruppe steht; und 1-Phenyl-3-methyl-4-(alkylphenylazo)-5-pyrazalon.

3. Zusammensetzung nach Anspruch 1 oder 2, wobei das Peroxid ausgewählt ist aus der Gruppe, bestehend aus Ketonperoxiden, Hydroperoxiden, Diacylperoxiden, Peroxyketalen, Peroxyestern, Peroxydicarbonate und Gemischen der Vorstehenden.

4. Zusammensetzung nach Anspruch 3, wobei das Peroxid ausgewählt ist aus der Gruppe, bestehend aus Methylethylketonperoxid, Methylisobutylketonperoxid, Cyclohexanonperoxid, Cumolhydroperoxid, tert.-Butylhydroperoxid, Benzoylperoxid, Lauroylperoxid, 1,1-Di(tert.-butylperoxy)cyclohexan, 1,1-Di(tert.-butylperoxy)-3,3,5-trimethylcyclohexan, tert.-Butylperoxybenzoat, tert.-Butylperoxy-2-ethylhexanoat, Bis(4-tert.-butylcyclohexyl)peroxydicarbonat und Gemischen der Vorstehenden.

5. Zusammensetzung nach einem der Ansprüche 1 bis 4, wobei der Farbstoff ausgewählt ist aus der Gruppe, bestehend aus 9,10-Anthracendion-1,4-bis(2-brom-4,6-dimethylphenyl)amino; 9,10-Anthracendion-1,4-{(2,6-dibrom-4-methylphenyl)amino}; 9,10-Anthracendion-1,4-bis(phenylthio); 9,10-Anthracendion-1,8-bis(methylphenyl)amino und 9,10-Anthracendion-1,4-bis(alkylphenyl)amino.

6. Zusammensetzung nach einem der Ansprüche 1 bis 5, umfassend das organische Peroxid, den Polyesterkunststoff und den Farbstoff.

7. Zusammensetzung nach Anspruch 6, wobei der Farbstoff in einem Gehalt vorliegt, der von 0,001 bis 10 Gew.-% liegt, bezogen auf das Gewicht des Peroxids.

8. Verfahren zum Härten ungesättigter Polyesterkunststoffe mit organischen Peroxidinitiatoren, das umfasst ein Kombinieren eines ungesättigten Polyesterkunststoffs, eines organischen Peroxidinitiators und eines Farbstoffs, der mit dem organischen Peroxid kompatibel ist und ausgewählt ist aus der Gruppe, bestehend aus:
Anthrachinonderivaten der folgenden Struktur: 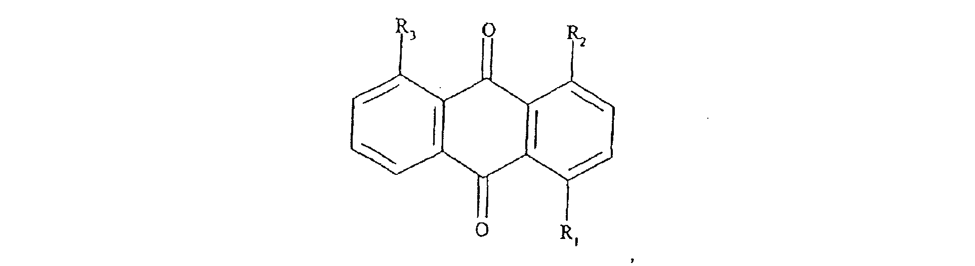
wobei R₁, R₂ und R₃ unabhängig ausgewählt sind aus der Gruppe, bestehend aus Wasserstoff, Alkyl und 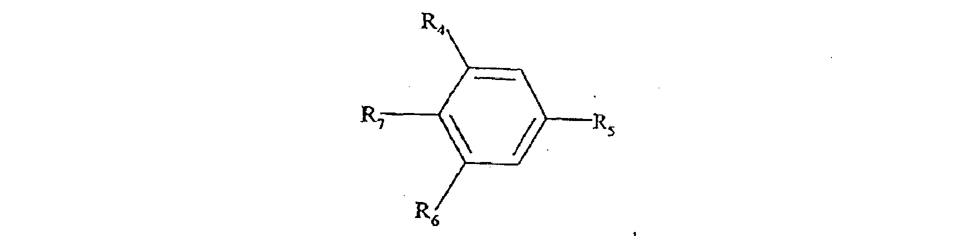 wobei R₇ für-NH, -NH-R₈ oder -S steht, R₈ für Alkylen steht, und R₄, R₅ und R₆ unabhängig ausgewählt
sind aus der Gruppe, bestehend aus Wasserstoff, Alkyl und Halogen,
mit der Maßgabe, dass mindestens eines von R₁, R₂ und R₃ für 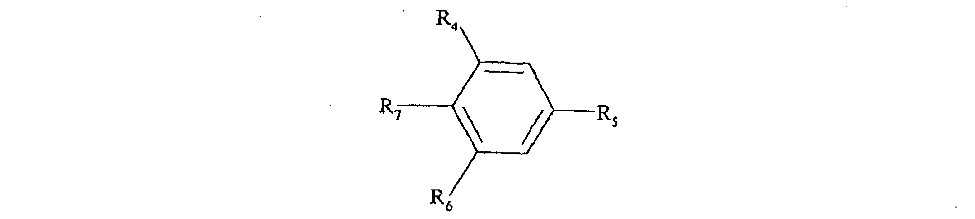 steht.

9. Verfahren nach Anspruch 8, das die Zugabe eines weiteren Farbstoffs umfasst, der ausgewählt ist aus Pyrazolonderivaten der folgenden Struktur: 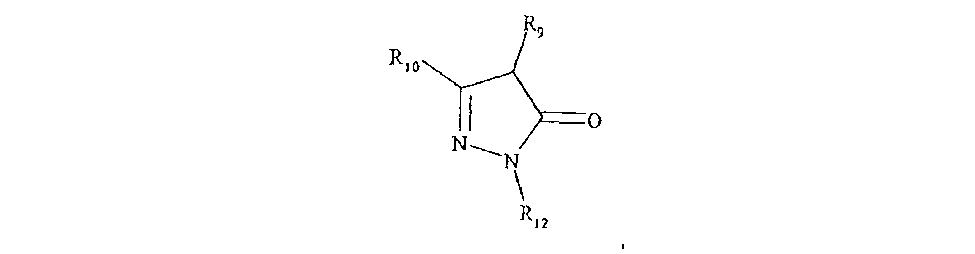 wobei
R₉ für Wasserstoff oder -NH-R₁₁ steht,
R₁₀ und R₁₁ unabhängig ausgewählt sind aus der Gruppe, bestehend aus Alkyl, Aryl und Aralkyl, und
R₁₂ für eine Arylgruppe steht; und 1-Phenyl-3-methyl-4-(alkylphenylazo)-5-pyrazalon.

10. Verfahren nach Anspruch 8 oder 9, wobei der Farbstoff in einem Gehalt zugegeben wird, der in einem Bereich liegt von etwa 0,001 bis etwa 10 Gew.-%, bezogen auf das Gewicht des Peroxids.

11. Verfahren nach einem der Ansprüche 8 bis 10, wobei das Peroxid ausgewählt ist aus der Gruppe, bestehend aus Ketonperoxiden, Hydroperoxiden, Diacylperoxiden, Peroxyketalen, Peroxyestern, Peroxydicarbonaten und Gemischen der Vorstehenden.

12. Verfahren nach Anspruch 11, wobei das Peroxid ausgewählt ist aus der Gruppe, bestehend aus Methylethylketonperoxid, Methylisobutylketonperoxid, Cyclohexanonperoxid, Cumolhydroperoxid, tert.-Butylhydroperoxid, Benzoylperoxid, Lauroylperoxid, 1,1-Di(tert.-butylperoxy)cyclohexan, 1,1-Di(tert.-butylperoxy)-3,3,5-trimethylcyclohexan, tert.-Butylperoxybenzoat, tert.-Butylperoxy-2-ethylhexanoat, Bis(4-tert.-butylcyclohexyl)peroxydicarbonat und Gemischen der Vorstehenden.

13. Verfahren nach einem der Ansprüche 8 bis 12, wobei der Farbstoff ausgewählt ist aus der Gruppe, bestehend aus 9,10-Anthracendion-1,4-bis(2-brom-4,6-dimethylphenyl)amino; 9,10-Anthracendion-1,4-{(2,6-dibrom-4-methylphenyl)amino}; 9,10- Anthracendion-1,4-bis(phenylthio); 9,10-Anthracendion-1,8-bis(methylphenyl)amino und 9,10-Anthracendion-1,4-bis(alkylphenyl)amino.

## Revendications

1. Composition comprenant :
A) au moins un colorant ; et
B) au moins un composant supplémentaire choisi dans le groupe constitué par :
1) les résines de polyester insaturées ; et
2) les initiateurs de peroxydes organiques ;
dans lequel le colorant est compatible avec quelque peroxyde organique présent que ce soit et est choisi dans le groupe constitué par :
les dérivés de l'anthraquinone ayant la structure : 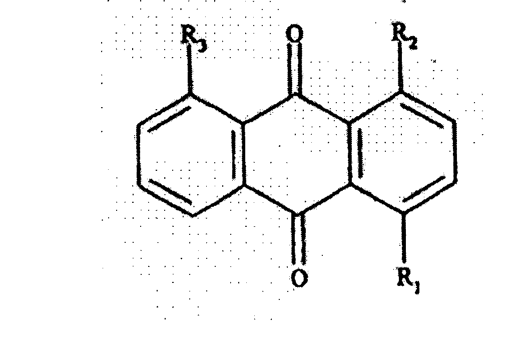
dans laquelle R₁, R₂, et R₃ sont choisis indépendamment dans le groupe constitué par hydrogène, alkyle, et 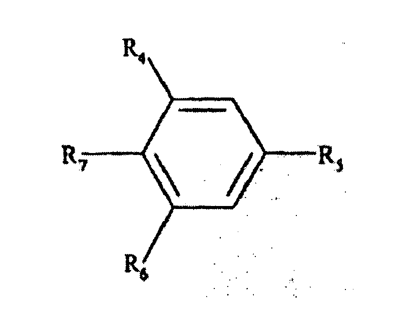 dans lequel R₇ est -NH, -NH-R₈, ou -S, R₈ est un alkylène, et R₄, R₅, et R₆ sont choisis indépendamment dans le groupe constitué par hydrogène, alkyle, et halogène,
à condition qu'au moins un parmi R₁, R₂, et R₃ soit

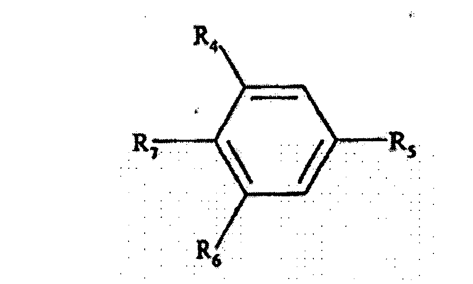

2. Composition de la revendication 1, laquelle comprend un autre colorant choisi parmi
les dérivés de la pyrazolone ayant la structure : 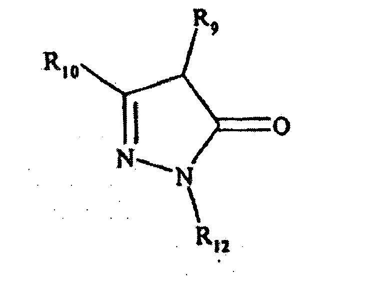 dans laquelle
R₉ est hydrogène ou -NH-R₁₁,
R₁₀ et R₁₁ sont indépendamment choisis dans le groupe constitué par alkyle, aryle et aralkyle,
et
R₁₂ est un groupe aryle; et 1-phényl-3-méthyl-4-(alkylphénylazo)-5-pyrazolone.

3. Composition de la revendication 1 ou 2, dans laquelle le peroxyde est choisi dans le groupe constitué par les peroxydes de cétone, les hydroperoxydes, les peroxydes de diacyle, les peroxykétals, les peroxyesters, les peroxydicarbonates, et les mélanges de ceux-ci.

4. Composition de la revendication 3 dans laquelle le peroxyde est choisi dans le groupe constitué par le peroxyde de méthyl éthyl cétone, le peroxyde de méthyl isobutyl cétone, le peroxyde de cyclohexanone, l'hydroperoxyde de cumène, l'hydroperoxyde de t-butyle, le peroxyde de benzoyle, le peroxyde de lauroyle, le 1,1-di(t-butyl peroxy)cyclohexane, le 1,1-di(t-butyl peroxy)3,3,5-trimethylcyclohexane, le peroxybenzoate de t-butyle, le t-butyl peroxy 2-éthyl hexanoate, le bis(4-t-butyl cyclohexyl)peroxydicarbonate) et les mélanges de ceux-ci.

5. Composition de l'une quelconque des revendications 1 à 4 dans laquelle le colorant est choisi dans le groupe constitué par le 9,10-anthracénédione-1,4-bis(2-bromo-4,6-diméthylphényl) amino ; le 9,10-anthracénédione-1,4{(2,6-dibromo-4-méthylphényl) amino} ; le 9,10-anthracénédione-1,4-bis(phénylthio) ; le 9,10-anthracénédione-1,8-bis (méthylphényl) amino ; et le 9,10-anthracénédione-1,4-bis(alkylphényl) amino.

6. Composition selon l'une des revendications 1 à 5, comprenant le peroxyde organique, la résine de polyester, et le colorant.

7. Composition de la revendication 6 dans laquelle le colorant est présent à un niveau de 0,001 à 10% en poids sur la base du poids du peroxyde.

8. Procédé de durcissement de résines de polyester insaturées avec des initiateurs de peroxydes organiques, comprenant l'association d'une résine de polyester insaturée, d'un initiateur de peroxyde organique et d'un colorant qui soit compatible avec le peroxyde organique et qui est choisi dans le groupe constitué par
les dérivés de l'anthraquinone ayant la structure : 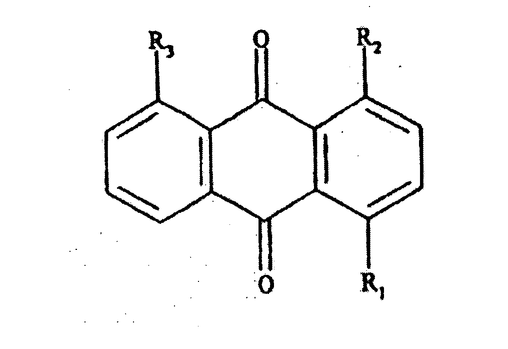 dans laquelle R₁, R₂, et R₃ sont choisis indépendamment dans le groupe constitué par hydrogène, alkyle, et 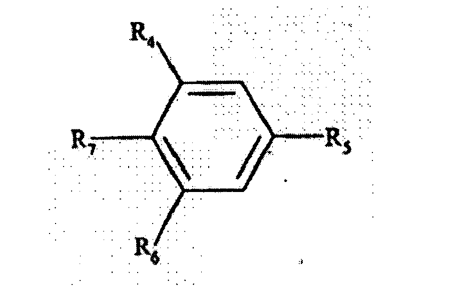 dans lequel R₇ est -NH, -NH-R₈, ou -S, R₈ est un alkylène, et R₄, R₅, et R₆ sont choisis indépendamment dans le groupe constitué par hydrogène, alkyle, et halogène,
à condition qu'au moins un parmi R₁, R₂, et R₃ soit

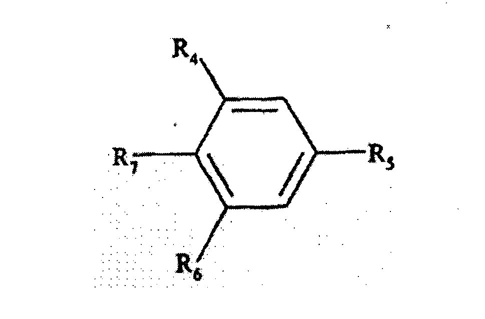

9. Procédé de la revendication 8, qui comprend l'addition d'un autre colorant choisi parmi
les dérivés de la pyrazolone ayant la structure : 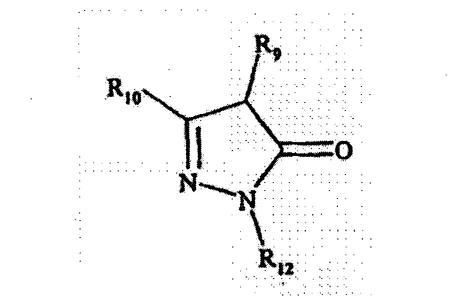 dans laquelle
R₉ est l'hydrogène ou -NH-R₁₁,
R₁₀ et R₁₁ sont indépendamment choisis dans le groupe constitué par alkyle, aryle et aralkyle,
et
R₁₂ est un groupe aryle ; et 1-phényl-3-méthyl-4-(alkylphénylazo)-5-pyrazolone.

10. Procédé de la revendication 8 ou 9 dans lequel le colorant est ajouté à un niveau de 0,001 à environ 10% en poids sur la base du poids du peroxyde.

11. Procédé de l'une quelconque des revendications 8 à 10 dans lequel le peroxyde est choisi dans le groupe constitué par les peroxydes de cétone, les hydroperoxydes, les peroxydes de diacyle, les peroxykétals, les peroxyesters, les peroxydicarbonates, et les mélanges de ceux-ci.

12. Procédé de la revendication 11 dans lequel le peroxyde est choisi dans le groupe constitué par le peroxyde de méthyl éthyl cétone, le peroxyde de méthyl isobutyl cétone, le peroxyde de cyclohexanone, l'hydroperoxyde de cumène, l'hydroperoxyde de t-butyle, le peroxyde de benzoyle, le peroxyde de lauroyle, le 1,1-di(t- butyl peroxy)cyclohexane, le 1,1-di(t-butyl peroxy)3,3,5-trimethylcyclohexane, le peroxybenzoate de t-butyle, le t-butyl peroxy 2-éthyl hexanoate, le bis(4-t-butyl cyclohexyl)peroxydicarbonate) et les mélanges de ceux-ci.

13. Procédé de l'une quelconque des revendications 8 à 12 dans lequel le colorant est choisi dans le groupe constitué par le 9,10-anthracénédione-1,4-bis(2-bromo-4,6-diméthylphényl) amino ; le 9,10-anthracénédione-1,4((2,6-dibromo-4-méthylphényl) amino} ; le 9,10-anthracénédione-1,4-bis(phénylthio) ; le 9,10-anthracénédione-1,8-bis (méthylphényl) amino ; et le 9,10-anthracénédione-1,4-bis(alkylphényl) amino.
